# EUROPEAN PATENT SPECIFICATION

(11) **EP 2 217 000 B1**
(45) Date of publication and mention of the grant of the patent: **21.09.2011**
(21) Application number: 10152594.7
(22) Date of filing: 04.02.2010
(51) Int. Cl.: H04N 13/00

(54) **Electronic imaging device and driving method thereof for displaying plain and stereoscopic images**
Elektronische Abbildungsvorrichtung und Verfahren zu ihrer Ansteuerung für die Darstellung von 2D und 3D Bildern
Dispositif d'imagerie électronique et son procédé de commande pour visualiser des images en 2D ou 3D

(30) Priority: 05.02.2009 KR 20090009363
(43) Date of publication of application: 11.08.2010
(73) Proprietor: Samsung Mobile Display Co., Ltd., Yongin-city, Gyunggi-do 446-711 (KR)
(72) Inventor: Komiya, Naoaki, Gyunggi-Do 446-711 (KR)
(74) Representative: Gulde Hengelhaupt Ziebig & Schneider

(56) References cited:
- EP-A1- 1 739 980
- EP-A1- 1 950 980
- HYO JIN LEE ET AL: "8.2: A High Resolution Autostereoscopic Display Employing a Time Division Parallax Barrier" SID 2006, 2006 SID INTERNATIONAL SYMPOSIUM, SOCIETY FOR INFORMATION DISPLAY, vol. XXXVII, 24 May 2005 (2005-05-24), pages 81-83, XP007012631 ISSN: 0006-966X
- Sergey Shestak, et. al.: "Teaching organic LED displays to deliver sharper high-definition stereo images"[Online] 12 June 2009 (2009-06-12), XP002574414 SPIE Newsroom Retrieved from the Internet: URL:http://spie.org/documents/Newsroom/Imp orted/1571/1571_5723_0_2009-06-04.pdf> [retrieved on 2010-03-22]

## Description

### 1. Field

Embodiments relate to an electronic imaging device. More particularly, embodiments relate to an electronic imaging device and a driving method thereof that is capable of displaying stereoscopic images and plane images.

### 2. Description of the Related Art

Generally, physiological factors and empirical factors allow a person to perceive a stereoscopic effect. In the three-dimensional image displaying technology, a stereoscopic effect of an object is generally represented by using binocular parallax, which is the most critical factor to allow a person to perceive the stereoscopic effect at a close range. The electronic imaging device displaying the stereoscopic images uses a method that spatially separates left and right images using optical devices. Representative methods include using a lenticular lens array and using a parallax barrier.

However, when displaying the stereoscopic image, since the stereoscopic image is separated into an image projected on a left eye (hereinafter referred to as "left-eye image") and an image projected on a right eye (hereinafter referred to as "right-eye image"), resolution of the stereoscopic image is halved as compared with that of a plane image.

The above information disclosed in this Background section is only for enhancement of understanding of the background of the invention and therefore it may contain information that does not form the prior art that is already known in this country to a person of ordinary skill in the art.
European Patent Application 1 950 980 discloses an image display apparatus which, in a 3D-mode operation, alternatively displays right-eye images and left-eye images.
Furthermore, European Patent Application 1 739 980 discloses a stereoscopic image display device comprising alternatively arranged left-eye pixels and right eye pixels and a parallax barrier to separate right-eye images from left-eye images to obtain a 3D effect.

### SUMMARY

Embodiments are therefore directed to an electronic imaging device and a driving method thereof, which substantially overcome one or more of the problems due to the limitations and disadvantages of the related art.

It is therefore a feature of an embodiment to provide an electronic imaging device and a driving method thereof capable of sharply displaying stereoscopic images.

It is another feature of an embodiment to provide an electronic imaging device and a driving method thereof capable of preserving resolution during display of stereoscopic images. At least one of the above and other features and advantages may be realized by providing an electronic imaging device including a display unit including a plurality of pixels divided into a first region and a second region, and a controller that generates first and second control signals to control the light emission of the plurality of pixels and applies the first and second control signals to the plurality of pixels in the first region and the plurality of pixels in the second region, respectively. The controller generates and applies the first control signal as a turn-off signal when second stereoscopic images synthesized in a second order different from a first order are displayed in the first region after first stereoscopic images synthesized in the first order are displayed in both the first and second regions. The first order is order of left-eye images and right-eye images, i.e. odd pixels display a left-eye image and even pixels display a right-eye image, and the second order may be an order of right-eye images and left-eye images, i.e. odd pixels display a right-eye image and even pixels display a left-eye image.

The electronic imaging device includes a barrier unit including a first sub-barrier that displays the first stereoscopic images and a second sub-barrier that displays the second stereoscopic images.

The controller may generate and supply the second control signal as a turn-off signal, and generate and supply the first control signal as a turn-on signal, when the second stereoscopic images are displayed in the second region after the second stereoscopic images are displayed throughout the first region.

When the first stereoscopic images are displayed on the first and second regions, the first sub-barrier may become non-transmitting and the second sub-barrier may become transmitting. When the second stereoscopic images are displayed in the first and second regions, the second sub-barrier may become non-transmitting and the first sub-barrier may become transmitting.

Each of the plurality of pixels may include a driving transistor including a first terminal and a second terminal, the first terminal configured to receive any one of the first and second control signals, the second terminal configured to receive data signals, the driving transistor configured to output a difference signal corresponding to a difference between a signal level at the first terminal and the second terminal, and an organic light emitting device connected to the driving transistor and configured to emit light in accordance with the difference signal.

The first and second control signals may be drive voltages or may be light emission control signals.

The controller may generate and apply the second light emission control signal as a turn-off voltage at a point in time when the second stereoscopic images are displayed in the second region after the second stereoscopic images are displayed throughout the first region.

Each of the plurality of pixels may include a switching device that is turned on by the scan signal and transfers the data signals, a driving transistor that is driven according to the output of the switching device and generates a current, an organic light emitting device that is light-emitted by the current, and a light emission control transistor that is connected between the driving transistor and the organic light emitting device and is turned on by any one of the first and second light emission control signals to supply the current to the organic light emitting device.

At least one of the above and other features and advantages may also be realized by providing a method of driving an electronic imaging device including a display unit having a plurality of pixels, the method including displaying first stereoscopic images synthesized in a first order throughout a first region where a plurality of first pixels of the plurality of pixels of the display unit are located and a second region where another plurality of second pixels of the plurality of pixels of the display unit are located, and turning off the plurality of first pixels when the second stereoscopic images synthesized in a second order different from the first order starts to display in the first region.

Turning off the plurality of first pixels may include using a driving voltage applied to the driving transistor as a turrn-off voltage.

The method may include turning off the plurality of second pixels when the second stereoscopic images are displayed in the second region and turning on the plurality of first pixels when the second stereoscopic images are displayed throughout the first region.

The method may include making the first sub-barrier non-transmitting and the second sub-barrier transmitting, for a period where the first stereoscopic images are displayed on the entire display unit and where the second stereoscopic images are displayed throughout the first region, and making the second sub-barrier non-transmitting and the first sub-barrier transmitting, from a point in time when the second stereoscopic images are displayed in the second region.

The first order may be an order of left-eye images and right-eye images and the second order may be an order of right-eye images and left-eye images.

Turning off the plurality of first pixels may include turning off light emission control transistors associated with corresponding first pixels.

The method may include turning on the light emission control transistors associated with the plurality of first pixels when second stereoscopic images start to display in the second region.

Displaying may include emitting light from an organic light emitting device.

Emitting light may include supplying a current from a driving transistor connected to the organic light emitting device.

Supplying the current may include turning on a light emission control transistor connected between the driving transistor and the organic light emitting device.

### BRIEF DESCRIPTION OF THE DRAWINGS

The above and other features and advantages will become more apparent to those of ordinary skill in the art by describing in detail exemplary embodiments with reference to the attached drawings, in which:

FIG. 1 illustrates a block diagram of an electronic imaging device according to a first exemplary embodiment;

FIG. 2 illustrates an equivalent circuit diagram of a pixel shown in FIG. 1;

FIGS. 3A and 3B illustrate diagrams of a time division scheme according to an exemplary embodiment;

FIG. 4 illustrates a diagram of a barrier according to an exemplary embodiment;

FIGS. 5A to 5D illustrate diagrams of a display unit while the electronic imaging device according to the first exemplary embodiment is changed from left and right images LR to right and left images RL;

FIG. 6 illustrates a diagram of first and second driving voltages ELV1 and ELV2;

FIG. 7 illustrates a diagram of first and second barrier driving signals CB1 and CB2;

FIG. 8 illustrates a block diagram of an electronic imaging device according to a second exemplary embodiment;

FIG. 9 illustrates an equivalent circuit diagram of a pixel shown in FIG. 8;

FIG. 10 illustrates a diagram of first and second light emission control signals EM 1 and EM2; and

FIG. 11 illustrates a diagram of first and second barrier driving signals CB1 and CB2.

### DETAILED DESCRIPTION

In the following detailed description, only certain exemplary embodiments have been shown and described, simply by way of illustration. As those skilled in the art would realize, the described embodiments may be modified in various different ways, all without departing from the scope of the present invention. Accordingly, the drawings and description are to be regarded as illustrative in nature and not restrictive. Like reference numerals designate like elements throughout the specification.

Throughout this specification and the claims that follow, when it is described that an element is "coupled" to another element, the element may be "directly coupled" to the other element or "electrically coupled" to the other element through a third element. In addition, unless explicitly described to the contrary, the word "comprise" and variations such as "comprises" or "comprising" will be understood to imply the inclusion of stated elements but not the exclusion of any other elements.

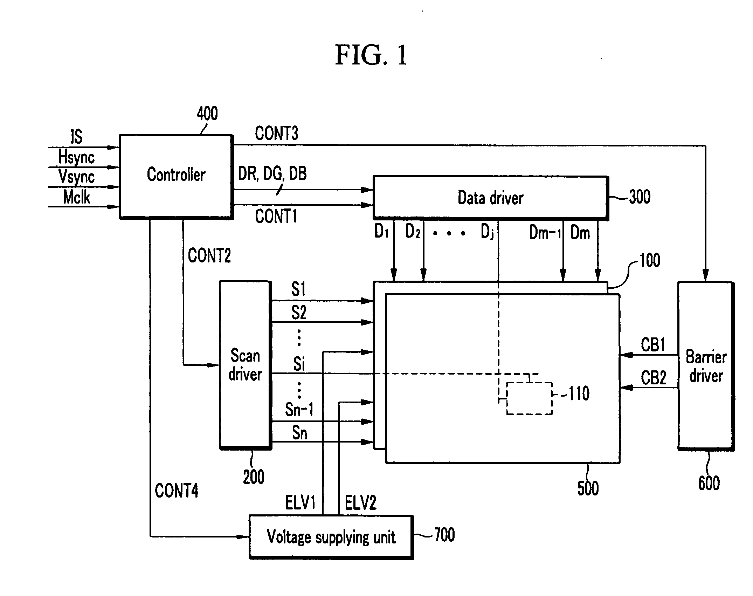

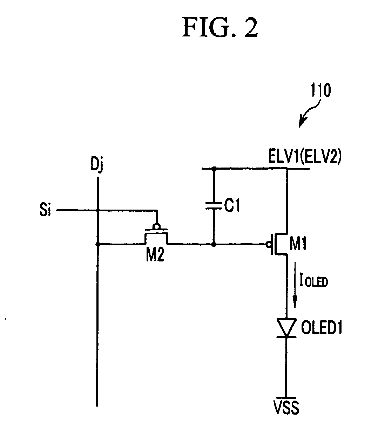

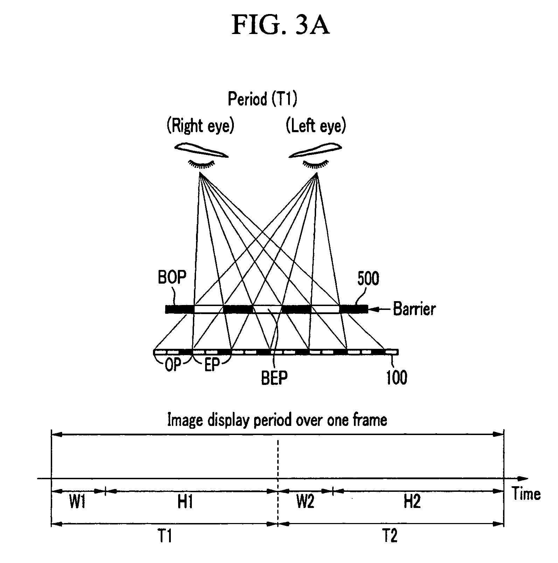

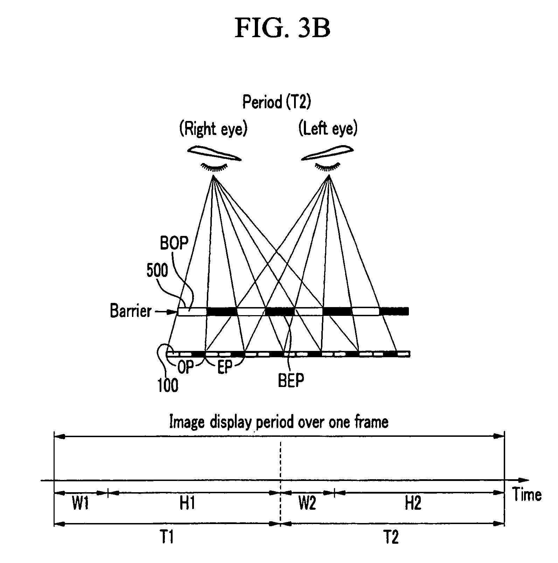

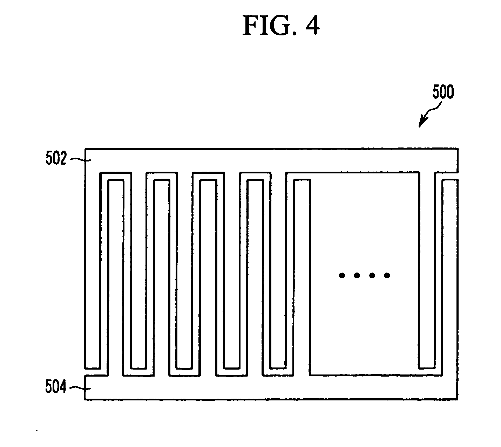

FIG. 1 illustrates a block diagram of an electronic imaging device according to a first exemplary embodiment. FIG. 2 illustrates an equivalent circuit diagram of a pixel 110 shown in FIG. 1. FIGS. 3A and 3B illustrate a time-division scheme according to an exemplary embodiment. FIG. 4 illustrates a diagram of a barrier according to an exemplary embodiment.

Referring to FIG. 1, an electronic imaging device according to the first exemplary embodiment may include a display unit 100, a scan driver 200, a data driver 300, a controller 400, a barrier unit 500, a barrier driver 600, and a voltage supplying unit 700.

The display unit 100 may include a plurality of signal lines S1 to Sn and D1 to Dm, a plurality of voltage lines (not shown), and a plurality of pixels 110 that are connected thereto and substantially arranged in a matrix form, when viewed from an equivalent circuit perspective.

The signal lines S1 to Sn and D1 to Dm may include a plurality of scan lines S1 to Sn that transfer scan signals and a plurality of data lines D1 to Dm that transfer data signals. The plurality of scan lines S1 to Sn may approximately extend in a row direction and may be approximately parallel with each other. The plurality of data lines D1 to Dm may approximately extend in a column direction and may be approximately parallel with each other.

The data signal may be a voltage signal (hereinafter referred to as a "data voltage") or a current signal (hereinafter referred to as a "data current") according to the type of pixel 110. Hereinafter, the data signal will be described as a data voltage.

The scan driver 200 may be connected to the scan lines S1 to Sn of the display unit 100 and may sequentially apply the scan signals to the scan lines S1 to Sn. Herein, the scan signal is a signal that turns on/off a switching transistor M2 (see FIG. 2) of the pixel 110.

The data driver 300 may be connected to the data lines D1 to Dm of the display unit 100, may convert input image data DR, DG, and DB input from the controller 400 into data voltages, and may apply the data voltages to the data lines D1 to Dm.

Referring to FIG. 2, each pixel 110, e.g., a pixel 110 connected to an i-th scan line Si (i=1, 2,..., n) and a j-th data line Dj (j=1, 2,..., m), may include an organic light emitting device OLED1, a driving transistor M1, a capacitor C1, and the switching transistor M2.

The organic light emitting device OLED1 may be an organic light emitting diode (OLED), and may include an anode connected to an output terminal of the driving transistor M 1 and a cathode connected to a common voltage Vss. The organic light emitting device OLED1 displays images by emitting light at different intensities according to an output current I_{OLED} of the driving transistor M1.

The organic light emitting device OLED1 may emit light of one of at least two primary colors. For example, the primary colors may include three primary colors, e.g., red, green, and blue, and a desired color may be displayed by a spatial sum or a temporal sum of these three primary colors.

Alternatively or additionally, some organic light emitting device OLED1 may emit white light, thereby increasing luminance. When the organic light emitting device OLED1 of all the pixels 110 emits white light, some pixels 110 may further include a color filter (not shown) that converts white light from the organic light emitting device OLED1 into any one of the primary colors.

The driving transistor M1 may include a control terminal, an input terminal, and an output terminal. The control terminal may be connected to the switching transistor M2, the input terminal may be connected to an output of the power supplying unit 700, and the output terminal may be connected to the organic light emitting device OLED1. The driving transistor M1 may transfer the current I_{OLED} whose magnitude varies according to a voltage applied between the control terminal and the output terminal.

The capacitor C1 may be connected between the control terminal and the input terminal of the driving transistor M1. The capacitor C1 may charge a data voltage applied to the control terminal of the driving transistor M1 and may maintain this data voltage even after the switching transistor M2 is turned off.

The switching transistor M2 may include a control terminal, an input terminal, and an output terminal. The control terminal may be connected to the scan line Si, the input terminal may be connected to the data line Dj, and the output terminal may be connected to the driving transistor M1. The switching transistor M2 may transfer the data signal applied to the data line Dj, i.e. the data voltage, in response to the scan signal applied to the scan line Si.

The switching transistor M2 and the driving transistor M1 may be p-channel field effect transistors (FETs). In this case, the control terminal, the input terminal, and the output terminal each respectively corresponds to a gate, a source, and a drain. However, either one or both of the switching transistor M2 and the driving transistor M1 may be a different type of transistor, e.g., an n-channel FET.

Further, a connection relationship of the driving transistor M1, the switching transistor M2, the capacitor C1, and the organic light emitting device OLED1 may be changed.

Referring back to FIG. 1, the controller 400 may receive an input signal IS, a horizontal synchronization signal Hsync, a vertical synchronization signal Vsync, and a main clock signal MCLK from the outside, may generate a scan control signal CONT2, a data control signal CONT1, image data signals DR, DG, and DB, a barrier driver control signal CONT3, and a voltage supplying control signal CONT4, and may transfer these signals to the scan driver 200, the data driver 300, the barrier driver 500, and the voltage supplying unit 700, respectively.

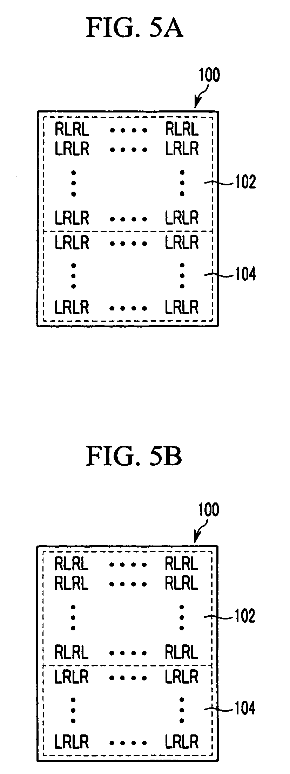

Herein, the voltage supplying control signal CONT4 according to the first exemplary embodiment is a signal that controls the voltage levels of the first driving voltage ELV1 and the second driving voltage ELV2 that are supplied to the first and second regions 102 and 104 (described in detail below with reference to FIGS. 5A to 5D) of the display unit 100, respectively.

In detail, each of the first and second driving voltages ELV1 and ELV2 has a turn-on voltage VON that turns on the pixel 110 and a turn-off voltage VOFF that turns off the pixel 110. The turn-on voltage VON may be a sufficiently high voltage VDD that can operate the driving transistor M1 in a saturation region throughout the range of the voltage of the data signal Dj applied to the gate electrode of the driving transistor M1. The turn-off voltage VOFF may be in a voltage range that does not transfer a current to the driving transistor M1.

The first region 102 and the second region 104 may be divided based on the pixel 110 of one row corresponding to the i-th scan line Si of the scan lines S1 to Sn. The i-th scan line Si may be defined by a line that is connected with the pixel 110 positioned at the center of the display unit 100.

The barrier unit 500 may be operated according to the time-division driving scheme when the stereoscopic image is displayed. The barrier unit 500 may include first and second barriers 502 and 504 (see FIG. 4) driven by first and second barrier driving signals CB1 and CB2. The barrier unit 500 may be in a transmitting state to transmit the images on the display unit 100 as it is when plane images are displayed.

The time-division driving scheme may include: 1) a scheme that alternately operates a light source left and right and divides the left and right by time division using an optical device, e.g., a combination of a prism and a lenticular lens; and 2) a scheme that moves a slit transmitting light in a liquid crystal barrier in synchronization with the displayed image by dividing one existing section into several sections.

The electronic imaging device according the exemplary embodiment will be described with reference to a case when it is driven by the method 2). However, embodiments are not limited thereto, and may use an optical device, e.g., a combination of a light source, a prism, and a lenticular lens, instead of a liquid crystal barrier, when the method 1) is used.

Further, FIG. 3A illustrates when images (hereinafter referred to as left and right images) synthesized in an order of left-eye images and right-eye images for a first period T1 are displayed to a user when one frame is divided into two periods, e.g., the first period T1 and a second period T2, and is driven by time division.

FIG. 3B illustrates a case where images (hereinafter, right and left images) synthesized in an order of right-eye images and left-eye images are displayed to a user for the second period T2.

Each of the periods T1 and T2 may be divided into data writing periods W1 and W2 and data sustain periods H1 and H2. New images are displayed during the writing period. When the writing of the new images is completed on the entire screen, the screen is maintained for the sustain period.

In the first period T1, an odd pixel OP of the display unit 100 is a left-eye pixel and an even pixel EP is a right-eye pixel. At this time, an odd pixel BOP of the barrier unit 500 is a non-transmitting region and an even pixel BEP is a transmitting pixel.

As shown in FIG. 3A, a first stereoscopic image is displayed by the pixels of the display unit 100 and a path through which the left-eye image is projected to a left eye and the right-eye image is projected to a right eye is formed. The left-eye image projected from the odd pixel OP is formed of images having a predetermined disparity with regard to the right-eye image and the right-eye image projected from the even pixel EP is formed of images having a predetermined disparity with regard to the left-eye image. Therefore, when a user recognizes the left-eye image projected from the odd pixel OP and the right-eye image projected from the even pixel EP through the user's left eye and right eye, respectively, he/she perceives the stereoscopic effect by obtaining depth information like viewing an actual stereoscopic object through a left eye and a right eye.

Next, in FIG. 3B, a second stereoscopic image is displayed by the pixels of the display unit 100, where the odd pixel OP of the display unit 100 is the right-eye pixel and the even pixel EP is the left-eye pixel. At this time, the odd pixel BOP of the barrier unit 500 is a transmitting region and the even pixel BEP is a non-transmitting region. At this time, as shown in FIG. 3B, a path through which the left-eye image is projected to a left eye and the right-eye image is projected to a right eye is formed.

The right-eye image projected from the odd pixel OP is formed of the images having a predetermined disparity with regard to the left-eye image and the left-eye image projected from the even pixel EP is formed of images having a predetermined disparity with regard to the right-eye image. Therefore, when a user recognizes the right-eye image projected from the odd pixel OP and the left-eye image projected from the even pixel EP through the user's left eye and right eye, respectively, he/she perceives the stereoscopic effect by obtaining depth information like viewing an actual stereoscopic object through a left eye and a right eye.

As such, in the first period T1, the odd pixel is displayed to a left eye and the even pixel is displayed to a right eye, and, in the second period T2, the odd pixel is displayed to a right eye and the even pixel is displayed to a left eye. Therefore, the user can view the stereoscopic image having the same resolution as the plane image. However, the barrier unit 500 is divided into a first sub-barrier 502 and a second sub-barrier 504 comprising columns of odd pixels BOP and columns of even pixels BEP, respectively, so that all even pixels BEP of the barrier unit 500 are transmitting at the same time or non-transmitting at the same time and the same occurs for the odd pixels BOP of the barrier unit 500. Since images are displayed along the scan direction where the scan signals are transferred to the plurality of scan lines S1 to Sn, there is a region where the first stereoscopic image displayed in Fig. 3A and the second stereoscopic image displayed in Fig. 3B overlap.

At this time, when first stereoscopic images are displayed in the entire image, and second stereoscopic images start to display at the writing period of the first period T1, the barrier is a suitable pattern for the first stereoscopic images, but image quality is deteriorated due to the input of the second stereoscopic images. Likewise, when the first stereoscopic images start to display during the writing period W2 of the second period T2, the barrier is a suitable pattern for the first stereoscopic images, but the image quality is deteriorated due to the input of the second stereoscopic images.

Embodiments drive the display unit 100 by dividing the display unit 100 into two regions 102 and 104 to prevent first and second stereoscopic images from overlapping during the first and second writing periods W1 and W2, as described in detail with reference to FIGS. 5A to 5D below.

Referring back to FIGS. 1 and 4, the barrier driver 600 may generate the first and second barrier driving signals CB1 and CB2 that operate the barrier unit 500 according to the barrier control signal CONT3 and may transfer them to the barrier unit 500. The first and second barrier driving signals CB1 and CB2 may be respectively transferred to a first sub-barrier 502 and a second sub-barrier 504. The first and second sub-barriers 502, 504 may respectively correspond to columns of odd and even pixels.

If the first barrier driving signal CB1 equals or exceeds a predetermined threshold voltage, the first sub-barrier 502 may become non-transmitting. If the second barrier driving signal CB2 equals or exceeds a predetermined threshold voltage or more, the second sub-barrier 504 may become non-transmitting.

The first and second barrier driving signals CB1 and CB2 according to the exemplary embodiment may alternately equal or exceed the predetermined threshold voltage for one frame. In detail, the voltage may be changed in synchronization with a point in time where the scan signal is input to the scan line Si of the display unit 100. A detailed description thereof will be given below with reference to FIGS. 5A to 5D.

The voltage supplying unit 700 may supply the first and second driving voltages ELV1 and ELV2 to the first and second regions 102 and 104 of the display unit 100, respectively, according to the voltage supplying control signal CONT4.

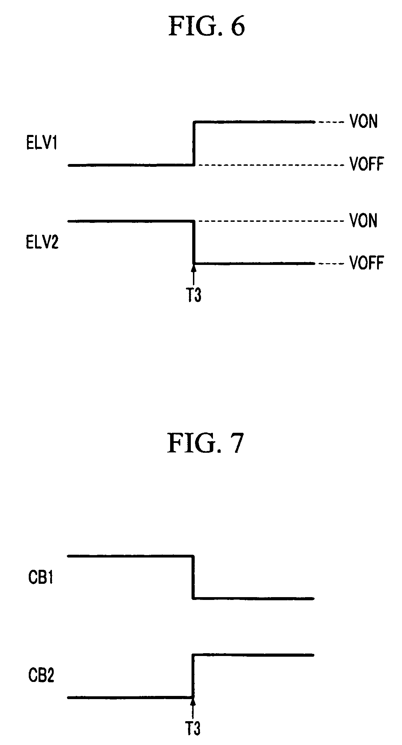

A driving method of the electronic imaging device according to the first exemplary embodiment having the above configuration will be described as follows. FIGS. 5A to 5D illustrate the display unit 100 while the electron imaging device changes from the left and right images LR to the right and left images RL. FIG. 6 illustrates the first and second driving voltages ELV1 and ELV2. FIG. 7 illustrates the first and second barrier driving signals CB1 and CB2.

Referring to FIG. 5A, when the right and left images RL start to be written in the first region 102 while the left and right images LR are displayed on the entire display unit 100, the voltage supplying unit 700 may supply the first driving voltage ELV1 having the turn-off voltage VOFF level to the first region 102. At this time, the driving transistor M1 of the pixel 110 located in the first region 102 is turned off.

The second driving voltage ELV2 may have the turn on voltage VON level and the first barrier driving signal CB1 may maintain a level equal to or greater than the predetermined threshold voltage. Further, the second barrier driving signal CB2 may maintain a level less than the predetermined threshold voltage. Therefore, when the first sub-barrier 502 becomes non-transmitting, i.e., suitable for the left and right image LR, the first region 102 is in the turned off state even if the right and left image RL is written. Thus, overlap of the right and left image RL and the left and right image LR may be prevented.

Next, referring to FIG. 5B, the voltage supplying unit 700 may supply the first driving voltage ELV1 having the turn-on voltage VON level to the first region 102 at a point in time T3 where the right and left image RL is written throughout the first region 102. At this time, the voltage supplying unit 700 may supply the second driving voltage ELV2 of the turn-off voltage VOFF level to the second region 104 and the barrier driver 600 may drop the first barrier driving signal CB1 to less than the predetermined threshold voltage and may increase the second barrier driving signal CB2 to equal or exceed the predetermined threshold voltage.

In this case, the driving transistor M1 of pixels 110 located in the first region 102 is turned on and the driving transistor M1 of pixels 110 located in the second region 104 is turned off. Further, the first sub-barrier 502 becomes transmitting and the second sub-barrier 504 becomes non-transmitting. That is, the barrier 500 becomes a pattern suitable for the right and left image RL, such that the right and left image RL is displayed in the first region 102. At this time, the second region 104 enters the turn-off state, such that the left and right image LR is not displayed.

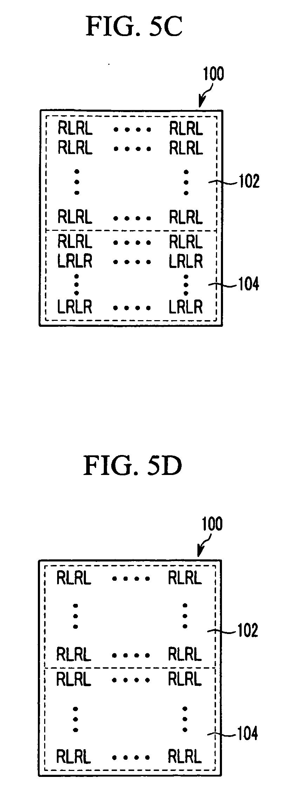

Next, referring to FIG. 5C, the right and left image RL starts to write in the second region 104. At this time, the first driving voltage ELV1 may maintain the turn-on voltage VON level and the second driving voltage ELV2 may maintain the turn-off voltage VOFF level. The first barrier driving signal CB1 may maintain the level of less than the predetermined threshold voltage and the second barrier driving signal CB2 may maintain the level of equal to or greater than the predetermined threshold voltage.

Next, referring to FIG. 5D, the voltage supplying unit 700 may supply the second driving voltage ELV2 of the turn-on voltage VON level to the second region 104 at a point in time where the right and left image RL is written throughout the second region 104. At this time, the right and left image RL is displayed throughout the first and second regions 102 and 104.

In other words, the first exemplary embodiment divides the display unit 100 into the first and second regions 102 and 104 to alternately turn-on/off the pixels of the first and second regions 102 and 104, thereby preventing the left and right image LR and the right and left image RL of the stereoscopic image from overlapping without dividing the barrier 500.

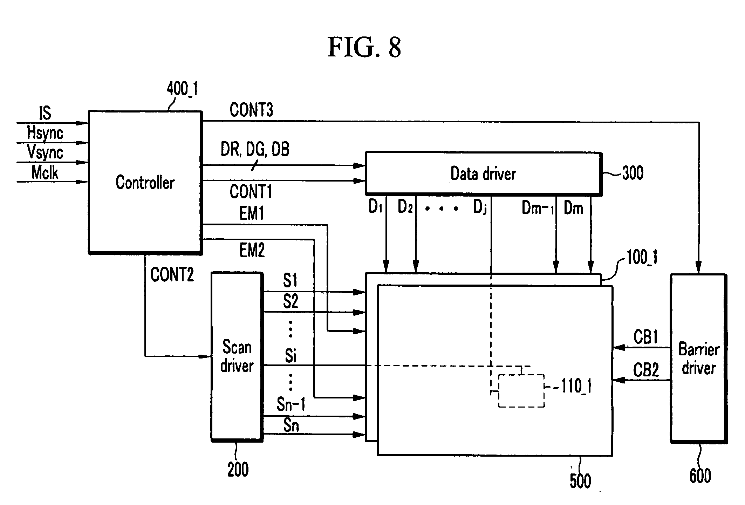

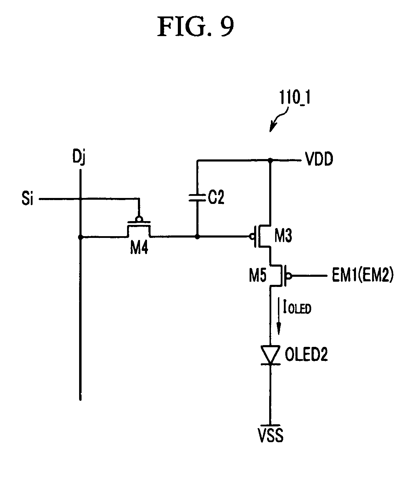

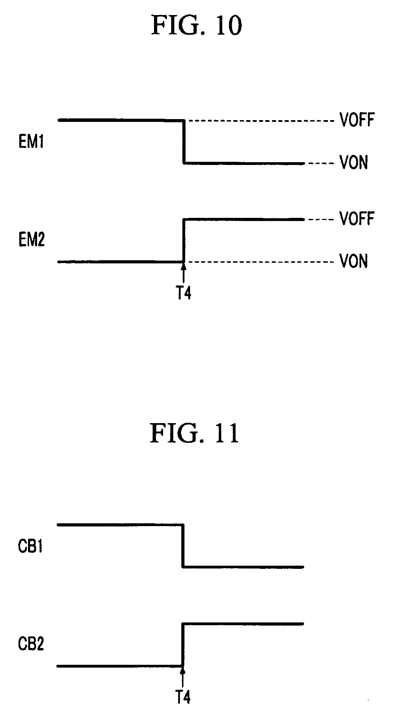

FIG. 8 illustrates a block diagram of an electronic imaging device according to a second exemplary embodiment, wherein the same components as those shown in FIG. 1 are denoted by the same reference numerals and a detailed description thereof will not be repeated. FIG. 9 illustrates an equivalent circuit diagram of the pixel 110_1 shown in FIG. 8. FIG. 10 illustrates the first and second light emission control signals EM1 and EM2. FIG. 11 illustrates the first and second barrier driving signals CB 1 and CB2.

Referring to FIG. 8, an electronic imaging device according to the second exemplary embodiment may include a display unit 100_1, the scan driver 200, the data driver 300, a controller 400_1, the barrier unit 500, and the barrier driver 600. The operations of the scan driver 200, the data driver 300, the barrier unit 500, and the barrier driver 600 are the same as in the description of FIG. 1, and therefore the description thereof will not be repeated.

The display unit 100_1 may include the plurality of signal lines S1 to Sn and D1 to Dm, a plurality of voltage lines (not shown), and a plurality of pixels 110_1 that are connected thereto and substantially arranged in a matrix form, when viewed from an equivalent circuit perspective.

Referring to FIG. 9, each pixel 110_1 may include an organic light emitting device OLED2, a driving transistor M3, a capacitor C2, a switching transistor M4, and a light emission control transistor M5.

The organic light emitting device OLED2 may be an organic light emitting diode (OLED), having an anode connected to an output terminal of the light emission control transistor M5 and a cathode connected to a common voltage Vss.

The driving transistor M3 may include a control terminal, an input terminal, and an output terminal. The control terminal may be connected to the switching transistor M4, the input terminal may be connected to an output of the power supply voltage VDD, and the output terminal may be connected to the organic light emitting device OLED2. The capacitor C2 may be connected between the control terminal and the input terminal of the driving transistor M3.

The switching transistor M4 may include a control terminal, an input terminal, and an output terminal. The control terminal may be connected to the scan line Si, the input terminal may be connected to the data line Dj, and the output terminal may be connected to the driving transistor M3.

The light emission control transistor M5 may include a control terminal, an input terminal, and an output terminal. The control terminal may be connected to an end for applying the first light emission control signal EM1 (or, the second light emission control signal EM2), the input terminal may be connected to the driving transistor M3, and the output terminal may be connected to the organic light emitting device OLED2.

If the light emitting control transistor M5 is turned on by the first light emission control signal EM1 (or the second light emission control signal EM2), the light emitting control transistor M5 supplies the current I_{OLED} flowing in the driving transistor M3 to the organic light emitting device OLED2.

In the specific example of FIG. 9, the switching transistor M4, the driving transistor M3, and the light emission control transistor M5 are p-channel FETs. In this case, the control terminal, the input terminal, and the output terminal respectively correspond to a gate, a source, and a drain. However, any one or all of the switching transistor M4, the driving transistor M3, and the light emission control transistor M5 may be another type of transistor, e.g., an n-channel FET. Further, a connection relationship of the driving transistor M3, the switching transistor M4, the capacitor C2, and the light emission control transistor OLED2 may be changed.

Referring back to FIG. 8, the controller 400_1 may receive the input signal IS, the horizontal synchronization signal Hsync, the vertical synchronization signal Vsync, and the main clock signal MCLK from the outside, may generate the scan control signal CONT2, the data control signal CONT1, image data signals DR, DG, and DB, a barrier driver control signal CONT3, and first and second light emission control signals EM1 and EM2, and may transfer them to the scan driver 200, the data driver 300, the barrier driver 500, and the display unit 100_1, respectively.

Herein, the first and second light emission control signals EM 1 and EM2 according to the second exemplary embodiment may be signals that control the light emission of the pixel 110_1 located in the first and second regions 102 and 104 (see FIGS. 5A to 5D).

Herein, the first and second light emission control signals EM1 and EM2 each has a turn-on voltage VON that turns on the pixel 110_1 and a turn-off voltage VOFF that turns off the pixel 110_1. In this particular configuration, the turn-on voltage VON is a low voltage level and the off-voltage VOFF is a high voltage level.

In other words, the first exemplary embodiment describes the turn-on/off of the first and second regions 102 and 104, by way of example, using the first and second driving voltages ELV1 and ELV2, but the second exemplary embodiment describes the turn on/off of the first and second regions 102 and 104, by way of example, using the first and second light emission control signals EM1 and EM2. This will be described below with reference to FIGS. 10 and 11.

Referring to FIG. 10, the first light emission control signal EM 1 maintains the turn-off voltage VOFF until the right and left images RL are written throughout the first region 102 (see FIGS. 5A and 5B). At this time, the second light emission control signal EM2 maintains the turn-on voltage VON level. Therefore, the light emission control transistor M5 of pixels 110_1 located in the first region 102 is turned off, such that the first region 102 becomes the turned-off region. The first light emission control signal EM1 switches to the turn-on VON level at a point in time T4 where the right and left image RL is written throughout the first region 102. At this time, the second light emission control signal EM2 switches to the turn-off voltage VOFF level.

Therefore, the first region 102 is turned off until the right and left image RL is written throughout the first region 102. Likewise, the second region 104 is turned off until the right and left image RL is written throughout the second region.

At this time, the first barrier driving signal CB1 maintains a voltage equal to or greater than the threshold voltage before time T4 and then drops to the below the threshold voltage at the point in time T4, as shown in FIG. 11. The second barrier driving signal CB2 maintains a voltage less than the threshold voltage before time T4 and rises to equal or exceed the threshold voltage or more at time T4.

Therefore, the second exemplary embodiment has only the light emission control transistor M5 separately and has the same effect as the first exemplary embodiment.

As described above, the electronic imaging device and the driving method thereof according to the present invention does not divide the barrier but alternately turns-on/off pixels of the first and second regions 102 and 104 of the display unit, making it possible to reduce power consumption.

Exemplary embodiments have been disclosed herein, and although specific terms are employed, they are used and are to be interpreted in a generic and descriptive sense only and not for purpose of limitation. Accordingly, it will be understood by those of ordinary skill in the art that various changes in form and details may be made without departing from the scope of the appended claims.

## Claims

1. An electronic imaging device adapted to display first stereoscopic images and second stereoscopic images according to a time-division scheme, comprising:
a display unit (100, 100_1) including a plurality of scan lines (S1, S2, Si, Sn-1, Sn), a plurality of data lines (D1, D2, Dj, Dm-1, Dm) and a plurality of pixels (110, 110_1) divided into a first region (102) and a second region (104), wherein the border between the first region (102) and the second region (104) is defined by the scan line (Si) connected with the pixel positioned at the center of the display unit (100, 100_1);
a barrier unit (500) including a first sub-barrier (502) for displaying first stereoscopic images and a second sub-barrier (504) for displaying second stereoscopic images; and
a controller (400, 400_1) that is adapted to generate first and second control signals (ELV1, ELV2, EM1, EM2) for controlling the light emission of the plurality of pixels and is adapted to apply the first and second control signals (ELV1, ELV2, EM1, EM2) to the plurality of pixels in the first region (102) and the plurality of pixels in the second region (104), respectively,
wherein first stereoscopic images are synthesized during a first period (T1) when odd pixels (OP) are adapted to display a left-eye image and even pixels (EP) are adapted to display a right-eye image and second stereoscopic images are synthesized during a second period (T2) when odd pixels (OP) are adapted to display a right-eye image and even pixels (EP) are adapted to display a left-eye image according to the time-division scheme; **characterized in that**
the controller (400, 400_1) is adapted to generate and apply the first control signal as a turn-off signal when second stereoscopic images are displayed in the first region (102) after first stereoscopic images have been displayed in both the first and second regions (102, 104).

2. The electronic imaging device as claimed in claim 1, wherein
the controller (400, 400_1) is adapted to generate and apply the second control signal as a turn-off signal and is adapted to generate and apply the first control signal as a turn-on signal when the second stereoscopic images are displayed in the second region (104) after the second stereoscopic images have been displayed throughout the first region (102).

3. The electronic imaging device as claimed in one of the preceding claims, wherein the first sub-barrier (502) comprises columns of odd pixels (BOP) and the second sub-barrier (504) comprises columns of even pixels (BEP).

4. The electronic imaging device as claimed in one of the preceding claims, wherein:
when the first stereoscopic images are displayed in the first and second regions (102, 104), the first sub-barrier (502) is adapted to become non-transmitting and the second sub-barrier (504) is adapted to become transmitting; and
when the second stereoscopic images are displayed in the first and second regions (102, 104), the second sub-barrier (504) is adapted to become non-transmitting and the first sub-barrier (502) is adapted to become transmitting.

5. The electronic imaging device as claimed in one of the preceding claims, wherein the first and second control signals are drive voltages (ELV1, ELV2) and/or wherein each of the plurality of pixels (100) includes:
a driving transistor (M1) including a first terminal and a second terminal, the first terminal configured to receive any one of the first and second control signals (ELV1, ELV2), the second terminal configured to receive data signals, the driving transistor (M1) configured to output a difference signal corresponding to a difference between a signal level at the first terminal and the second terminal; and
an organic light emitting device (OLED1) connected to the driving transistor (M1) and configured to emit light in accordance with the difference signal.

6. The electronic imaging device as claimed in one of claims 1-4, wherein the first and second control signals are light emission control signals (EM1, EM2) and/or wherein each of the plurality of pixels (110_1) includes:
a switching device (M4) that is adapted to be turned on by the scan signal and to transfer the data signals;
a driving transistor (M3) that is adapted to be driven according to the output of the switching device (M4) and to generate a current;
an organic light emitting device (OLED2) that is adapted to be light-emitted by the current; and
a light emission control switch (M5) connected between the driving transistor (M3) and the organic light emitting device (OLED2) and is adapted to be turned on by any one of the first and second light emission control signals (EM1, EM2) to supply the current to the organic light emitting device (OLED2).

7. A method of driving an electronic imaging device including
a display unit (100, 100_1) having a plurality of scan lines (S1, S2, Si, Sn-1, Sn), a plurality of data lines (D1, D2, Dj, Dm-1, Dm) and a plurality of pixels (110, 110_1) including a plurality of driving transistors (M1, M3) supplying a plurality of currents to a plurality of organic light emitting devices (OLED1, OLED2); and
a barrier unit (500) including a first sub-barrier (502) and a second sub-barrier (504); the method comprising:
dividing the display unit (100, 100_1) in a first region (102) and in a second region (104), the first region (102) and the second region (104) being separated by the scan line (Si) connected with the pixel positioned at the center of the display unit (100, 100_1);
synthesizing first stereoscopic images in which odd pixels (OP) display a left-eye image and even pixels (EP) display a right-eye image during a first period (T1) and synthesizing second stereoscopic images in which odd pixels (OP) display a right-eye image and even pixels (EP) display a left-eye image during a second period (T2);
displaying first stereoscopic images throughout the first region (102) where a plurality of first pixels of the plurality of pixels of the display unit (100, 100_1) are located and the second region (104) where a plurality of second pixels of the plurality of pixels of the display unit (100, 100_1) are located, wherein displaying first stereoscopic images comprises sequentially supplying data voltages to the respective data lines (D1, D2, Dm) during a first writing period (W1) of the first period (T1) and displaying second stereoscopic images comprises sequentially supplying data voltages to the respective data lines (D1, D2, Dm) during a second writing period (W2) of the second period (T2);and
**characterized by**
turning off the plurality of first pixels in the first region (102) when second stereoscopic images start to be displayed in the first region (102), wherein turning off the plurality of first pixels in the first region (102) comprises supplying a first control signal (ELV1, EM1) having a turn-off level to the first region (102).

8. The method of driving an electronic imaging device as claimed in claim 7, further comprising:
turning off the plurality of second pixels in the second region (104) when second stereoscopic images are displayed in the second region (104); and
turning on the plurality of first pixels in the first region (102) when second stereoscopic images are displayed throughout the first region (102),
wherein turning off the plurality of second pixels comprises supplying a second control signal (ELV2, EM2) having a turn-off level to the second region (104), and
wherein turning on the plurality of first pixels comprises supplying the first control signal (ELV1, EM1) having a turn-on level to the first region (102).

9. The method of driving an electronic imaging device as claimed in claim 8, further comprising:
making the first sub-barrier (502) non-transmitting and the second sub-barrier (504) transmitting, for a period where first stereoscopic images are displayed on the entire display unit (100, 100_1) and where second stereoscopic images are displayed throughout the first region (102); and
making the second sub-barrier (504) non-transmitting and the first sub-barrier (502) transmitting, from a point in time when second stereoscopic images are displayed in the second region,
wherein making the first sub-barrier (502) non-transmitting comprises supplying a first barrier driving signal (CB1) having a level equal to or greater than a predetermined threshold voltage to the first sub-barrier (502) and
wherein making the second sub-barrier (504) non-transmitting comprises supplying a second barrier driving signal (CB2) having a level equal to or greater than a predetermined threshold voltage to the second sub-barrier (504).

10. The method of driving an electronic imaging device as claimed in one of claims 7-9, wherein the first sub-barrier (502) comprises columns of odd pixels (BOP) and the second sub-barrier (504) comprises columns of even pixels (BEP).

11. The method of driving an electronic imaging device as claimed in one of claims 7-10, wherein turning off the plurality of first pixels includes using a driving voltage (ELV1) applied to the driving transistor (M1) as a turn-off voltage.

12. The method of driving an electronic imaging device as claimed in one of claims 7-10, wherein turning off the plurality of first pixels includes turning off light emission control switches (M5) associated with corresponding first pixels.

13. The method of driving an electronic imaging device as claimed in one of claims 7-12, wherein displaying includes emitting light from an organic light emitting device (OLED1, OLED2) and supplying current from a driving transistor to the organic light emitting device.

14. The method of driving an electronic imaging device as claimed in claim 13, wherein supplying the current include turning on a light emission control switch (M5) connected between the driving transistor (M3) and the organic light emitting device (OLED2).

## Patentansprüche

1. Elektronische Abbildungsvorrichtung, die so angepasst ist, dass sie gemäß einem Zeitaufteilungsplan erste 3D-Bilder und zweite 3D-Bilder darstellt, umfassend:
eine Anzeigeeinheit (100, 100_1) mit einer Mehrzahl von Abtastzeilen (S1, S2, Si, Sn-1, Sn), einer Mehrzahl von Datenzeilen (D1, D2, Dj, Dm-1, Dm) und einer Mehrzahl von Pixeln (110, 110_1), die in einen ersten Bereich (102) und einen zweiten Bereich (104) aufgeteilt sind, wobei die Grenze zwischen dem ersten Bereich (102) und dem zweiten Bereich (104) durch die mit dem in der Mitte der Anzeigeeinheit (100, 100_1) positionierten Pixel verbundene Abtastzeile (Si) definiert ist,
eine Barriereeinheit (500) mit einer ersten Teilbarriere (502) für die Darstellung erster 3D-Bilder und einer zweiten Teilbarriere (504) für die Darstellung zweiter 3D-Bilder und
eine Steuereinheit (400, 400_1), die so angepasst ist, dass sie erste und zweite Steuersignale (ELV1, ELV2, EM1, EM2) zur Steuerung der Lichtemission der Mehrzahl von Pixeln erzeugt, und so angepasst ist, das sie die ersten und zweiten Steuersignale (ELV1, ELV2, EM1, EM2) an die Mehrzahl von Pixeln im ersten Bereich (102) bzw. die Mehrzahl von Pixeln im zweiten Bereich (104) anlegt,
wobei gemäß dem Zeitaufteilungsplan erste 3D-Bilder während eines ersten Zeitraums (T1) erzeugt werden, in dem ungerade Pixel (OP) so angepasst sind, dass sie ein Bild für das linke Auge darstellen, und gerade Pixel (EP) so angepasst sind, dass sie ein Bild für das rechte Auge darstellen, und zweite 3D-Bilder während eines zweiten Zeitraums (T2) erzeugt werden, in dem ungerade Pixel (OP) so angepasst sind, dass sie ein Bild für das rechte Auge darstellen, und gerade Pixel (EP) so angepasst sind, dass sie ein Bild für das linke Auge darstellen,
**dadurch gekennzeichnet, dass**
die Steuereinheit (400, 400_1) so angepasst ist, dass sie das erste Steuersignal als Abschaltsignal erzeugt und anlegt, wenn zweite 3D-Bilder im ersten Bereich (102) dargestellt werden, nachdem erste 3D-Bilder sowohl im ersten als auch im zweiten Bereich (102, 104) dargestellt wurden.

2. Elektronische Abbildungsvorrichtung nach Anspruch 1, wobei
die Steuereinheit (400, 400_1) so angepasst ist, dass sie das zweite Steuersignal als Abschaltsignal erzeugt und anlegt, und so angepasst ist, dass sie das erste Steuersignal als Einschaltsignal erzeugt und anlegt, wenn die zweiten 3D-Bilder im zweiten Bereich (104) dargestellt werden, nachdem die zweiten 3D-Bilder im gesamten ersten Bereich (104) dargestellt wurden.

3. Elektronische Abbildungsvorrichtung nach einem der vorangehenden Ansprüche, wobei die erste Teilbarriere (502) Spalten mit ungeraden Pixeln (BOP) umfasst und die zweite Teilbarriere (504) Spalten mit geraden Pixeln (BEP) umfasst.

4. Elektronische Abbildungsvorrichtung nach einem der vorangehenden Ansprüche, wobei:
wenn die ersten 3D-Bilder im ersten und zweiten Bereich (102, 104) dargestellt werden, die erste Teilbarriere (502) so angepasst ist, dass sie undurchlässig wird, und die zweite Teilbarriere (504) so angepasst ist, dass sie durchlässig wird, und
wenn die zweiten 3D-Bilder im ersten und zweiten Bereich (102, 104) dargestellt werden, die zweite Teilbarriere (504) so angepasst ist, dass sie undurchlässig wird, und die erste Teilbarriere (502) so angepasst ist, dass sie durchlässig wird.

5. Elektronische Abbildungsvorrichtung nach einem der vorangehenden Ansprüche, wobei die ersten und zweiten Steuersignale Ansteuerspannungen (ELV1, ELV2) sind und/oder wobei jedes der Mehrzahl von Pixeln (100) einschließt:
einen Ansteuertransistor (M1) mit einem ersten Anschlusspunkt und einem zweiten Anschlusspunkt, wobei der erste Anschlusspunkt so ausgestaltet ist, dass er eines der ersten und zweiten Steuersignale (ELV1, ELV2) empfängt, der zweite Anschlusspunkt so ausgestaltet ist, dass er Datensignale empfängt, der Ansteuertransistor (M1) so ausgestaltet ist, dass er ein Differenzsignal ausgibt, das einer Differenz zwischen einem Signalpegel am ersten Anschlusspunkt und am zweiten Anschlusspunkt entspricht, und
eine organische Leuchtvorrichtung (OLED1), die mit dem Ansteuertransistor (M1) verbunden ist und so ausgestaltet ist, dass sie gemäß dem Differenzsignal Licht aussendet.

6. Elektronische Abbildungsvorrichtung nach einem der Ansprüche 1 - 4, wobei die ersten und zweiten Steuersignale Lichtemissionssteuersignale (EM1, EM2) sind und/oder wobei jedes der Mehrzahl von Pixeln (110_1) einschließt:
eine Schaltvorrichtung (M4), die so angepasst ist, dass sie durch das Abtastsignal eingeschaltet wird und die Datensignale überträgt,
einen Ansteuertransistor (M3), der so angepasst ist, dass er gemäß der Ausgabe der Schaltvorrichtung (M4) angesteuert wird und einen Strom erzeugt,
eine organische Leuchtvorrichtung (OLED2), die ausbildet ist, durch Strom erleuchtet zu werden, und
einen Lichtemissionssteuerschalter (M5), der zwischen dem Ansteuertransistor (M3) und der organischen Leuchtvorrichtung (OLED2) geschaltet ist und so angepasst ist, dass er durch eines der ersten und zweiten Lichtemissionssteuersignale (EM1, EM2) eingeschaltet wird, um der organischen Leuchtvorrichtung (OLED2) den Strom zuzuführen.

7. Verfahren zur Ansteuerung einer elektronischen Abbildungsvorrichtung mit einer Anzeigeeinheit (100, 100_1) mit einer Mehrzahl von Abtastzeilen (S1, S2, Si, Sn-1, Sn), einer Mehrzahl von Datenzeilen (D1, D2, Dj, Dem-1, Dm) und einer Mehrzahl von Pixeln (110, 110_1) mit einer Mehrzahl von Ansteuertransistoren (M1, M3), die einer Mehrzahl organischer Leuchtvorrichtungen (OLED1, OLED2) eine Mehrzahl von Strömen zuführen, und
einer Barriereeinheit (500) mit einer ersten Teilbarriere (502) und einer zweiten Teilbarriere (504),
wobei das Verfahren umfasst:
Aufteilen der Anzeigeeinheit (100, 100_1) in einen ersten Bereich (102) und einen zweiten Bereich (104), wobei der erste Bereich (102) und der zweite Bereich (104) durch die mit dem in der Mitte der Anzeigeeinheit (100, 100_1) positionierten Pixel verbundene Abtastzeile (Si) getrennt sind,
Erzeugen erster 3D-Bilder, bei denen ungerade Pixel (OP) ein Bild für das linke Auge darstellen und gerade Pixel (EP) ein Bild für das rechte Auge darstellen, während eines ersten Zeitraums (T1) und Erzeugen zweiter 3D-Bilder, bei denen ungerade Pixel (OP) ein Bild für das rechte Auge darstellen und gerade Pixel (EP) ein Bild für das linke Auge darstellen, während eines zweiten Zeitraums (T2),
Darstellen erster 3D-Bilder im gesamten ersten Bereich (102), in dem eine Mehrzahl erster Pixel der Mehrzahl von Pixeln der Anzeigeeinheit (100, 100_1) befindlich ist, und zweiten Bereich (104), in dem eine Mehrzahl zweiter Pixel der Mehrzahl von Pixeln der Anzeigeeinheit (100, 100_1) befindlich ist, wobei das Darstellen erster 3D-Bilder die sequenzielle Zufuhr von Datenspannungen zu den jeweiligen Datenzeilen (D1, D2, Dm) während eines ersten Schreibzeitraums (W1) des ersten Zeitraums (T1) umfasst und das Darstellen zweiter 3D-Bilder die sequenzielle Zufuhr von Datenspannungen zu den jeweiligen Datenzeilen (D1, D2, Dm) während eines zweiten Schreibzeitraums (W2) des zweiten Zeitraums (T2) umfasst, und
**gekennzeichnet durch**
Abschalten der Mehrzahl erster Pixel im ersten Bereich (102), sobald zweite 3D-Bilder im ersten Bereich (102) dargestellt werden, wobei das Abschalten der Mehrzahl von Pixeln im ersten Bereich (102) die Zufuhr eines ersten Steuersignals (ELV1, EM1) mit einem Abschaltpegel zum ersten Bereich (102) umfasst.

8. Verfahren zur Ansteuerung einer elektronischen Abbildungsvorrichtung nach Anspruch 7, ferner umfassend:
Abschalten der Mehrzahl zweiter Pixel im zweiten Bereich (104), wenn zweite 3D-Bilder im zweiten Bereich (104) dargestellt werden, und
Einschalten der Mehrzahl erster Pixel im ersten Bereich (102) wenn zweite 3D-Bilder im gesamten ersten Bereich (102) dargestellt werden,
wobei das Abschalten der Mehrzahl zweiter Pixel die Zufuhr eines zweiten Steuersignals (ELV2, EM2) mit einem Abschaltpegel zum zweiten Bereich (104) umfasst und
wobei das Einschalten der Mehrzahl erster Pixel die Zufuhr des ersten Steuersignals (ELV1, EM1) mit einem Einschaltpegel zum ersten Bereich (102) umfasst.

9. Verfahren zur Ansteuerung einer elektronischen Abbildungsvorrichtung nach Anspruch 8, ferner umfassend:
Undurchlässigmachen der ersten Teilbarriere (502) und Durchlässigmachen der zweiten Teilbarriere (504) für einen Zeitraum, in dem erste 3D-Bilder auf der gesamten Anzeigeeinheit (100, 100_1) dargestellt werden und in dem zweite 3D-Bilder im gesamten ersten Bereich (102) dargestellt werden, und
Undurchlässigmachen der zweiten Teilbarriere (504) und Durchlässigmachen der ersten Teilbarriere (502) ab einem Zeitpunkt, zu dem zweite 3D-Bilder im zweiten Bereich dargestellt werden,
wobei das Undurchlässigmachen der ersten Teilbarriere (502) die Zufuhr eines ersten Barriereansteuersignals (CB1), dessen Pegel gleich oder größer als eine vorab festgelegte Schwellenspannung ist, zur ersten Teilbarriere (502) umfasst und
wobei das Undurchlässigmachen der zweiten Teilbarriere (504) die Zufuhr eines zweiten Barriereansteuersignals (CB2), dessen Pegel gleich oder größer als eine vorab festgelegte Schwellenspannung ist, zur zweiten Teilbarriere (504) umfasst.

10. Verfahren zur Ansteuerung einer elektronischen Abbildungsvorrichtung nach einem der Ansprüche 7 - 9, wobei die erste Teilbarriere (502) Spalten mit ungeraden Pixeln (BOP) umfasst und die zweite Teilbarriere (504) Spalten mit geraden Pixeln (BEP) umfasst.

11. Verfahren zur Ansteuerung einer elektronischen Abbildungsvorrichtung nach einem der Ansprüche 7 - 10, wobei das Abschalten der Mehrzahl erster Pixel die Verwendung einer Ansteuerspannung (ELV1) einschließt, die als Abschaltspannung an den Ansteuertransistor (M1) angelegt wird.

12. Verfahren zur Ansteuerung einer elektronischen Abbildungsvorrichtung nach einem der Ansprüche 7 - 10, wobei das Abschalten der Mehrzahl erster Pixel das Abschalten der den entsprechenden ersten Pixeln zugeordneten Lichtemissionsteuerschalter (M5) einschließt.

13. Verfahren zur Ansteuerung einer elektronischen Abbildungsvorrichtung nach einem der Ansprüche 7 - 12, wobei das Abbilden das Aussenden von Licht von einer organischen Leuchtvorrichtung (OLED1, OLED2) und die Zufuhr von Strom von einem Ansteuertransistor zu der organischen Leuchtvorrichtung einschließt.

14. Verfahren zur Ansteuerung einer elektronischen Abbildungsvorrichtung nach Anspruch 13, wobei die Zufuhr des Stroms das Einschalten eines Lichtemissionssteuerschalters (M5) einschließt, der zwischen dem Ansteuertransistor (M3) und der organischen Leuchtvorrichtung (OLED2) geschaltet ist.

## Revendications

1. Dispositif d'imagerie électronique conçu pour afficher des premières images stéréoscopiques et des secondes images stéréoscopiques selon un système à répartition dans le temps, comprenant :
une unité (100, 100_1) d'affichage incluant une pluralité de lignes (S1, S2, Si, Sn-1, Sn) de balayage, une pluralité de lignes (D1, D2, Dj, Dm-1, Dm) de données et une pluralité de pixels (110, 110_1) répartis entre une première région (102) et une seconde région (104), la frontière entre la première région (102) et la seconde région (104) étant définie par une ligne (Si) de balayage liée au pixel placé au centre de l'unité (100, 100_1) d'affichage ;
une unité (500) formant barrière incluant une première sous-barrière (502) destinée à afficher des premières images stéréoscopiques et une seconde sous-barrière (504) destinée à afficher des secondes images stéréoscopiques ; et
un régisseur (400, 400_1) qui est conçu pour engendrer des premiers et seconds signaux (ELV1, ELV2, EM1, EM2) de commande destinés à commander l'émission de lumière de la pluralité de pixels et qui est conçu pour appliquer les premiers et seconds signaux (ELV1, ELV2, EM1, EM2) de commande à la pluralité de pixels de la première région (102) et à la pluralité de pixels de la seconde région (104), respectivement,
dans lequel les premières images stéréoscopiques sont synthétisées durant une première période (T1) lorsque les pixels impairs (OP) sont conçus pour afficher une image pour l'oeil gauche et les pixels pairs (EP) sont conçus pour afficher une image pour l'oeil droit et les secondes images stéréoscopiques sont synthétisées durant une seconde période (T2) lorsque les pixels impairs (OP) sont conçus pour afficher une image pour l'oeil droit et les pixels pairs (EP) sont conçus pour afficher une image pour l'oeil gauche selon le système à répartition dans le temps ;
**caractérisé en ce que** le régisseur (400, 400_1) est conçu pour engendrer et appliquer le premier signal de commande comme un signal d'extinction lorsque les secondes images stéréoscopiques sont affichées dans la première région (102) après que les premières images stéréoscopiques ont été affichées dans à la fois les première et seconde régions (102, 104).

2. Dispositif d'imagerie électronique selon la revendication 1, dans lequel le régisseur (400, 400_1) est conçu pour engendrer et appliquer le second signal de commande comme un signal d'extinction et est conçu pour engendrer et appliquer le premier signal de commande comme un signal d'allumage lorsque les secondes images stéréoscopiques sont affichées dans la seconde région (104) après que les secondes images stéréoscopiques ont été affichées dans la première région (102).

3. Dispositif d'imagerie électronique selon l'une quelconque des revendications précédentes, dans lequel la première sous-barrière (502) comprend des colonnes de pixels impairs (BOP) et la seconde sous-barrière (504) comprend des colonnes de pixels pairs (BEP).

4. Dispositif d'imagerie électronique selon l'une quelconque des revendications précédentes, dans lequel :
lorsque les premières images stéréoscopiques sont affichées sur les première et seconde régions (102, 104), la première sous-barrière (502) est conçue pour devenir non transmissive et la seconde sous-barrière (504) est conçue pour devenir transmissive ; et
lorsque les secondes images stéréoscopiques sont affichées sur les première et seconde régions (102, 104), la seconde sous-barrière (504) est conçue pour devenir non transmissive et la première sous-barrière (502) est conçue pour devenir transmissive.

5. Dispositif d'imagerie électronique selon l'une quelconque des revendications précédentes, dans lequel les premier et second signaux de commande sont des tensions (ELV1, ELV2) d'attaque et/ou dans lequel chacun de la pluralité de pixels (100) inclut :
un transistor (M1) d'attaque incluant une première borne et une seconde borne, la première borne étant configurée pour recevoir l'un quelconque des premier et second signaux (ELV1, ELV2) d'attaque, la seconde borne étant configurée pour recevoir des signaux de données, le transistor (M1) d'attaque étant configuré pour sortir un signal de différence correspondant à la différence entre un niveau de signal à la première borne et à la seconde borne ; et
un dispositif électroluminescent organique (OLED1) connecté au transistor (M1) d'attaque et configuré pour émettre de la lumière en fonction du signal de différence.

6. Dispositif d'imagerie électronique selon l'une quelconque des revendications 1 à 4, dans lequel les premier et second signaux de commande sont des signaux (EM1, EM2) de commande d'émission de lumière et/ou dans lequel chacun de la pluralité de pixels (110_1) inclut :
un dispositif (M4) de commutation qui est conçu pour être fermé par le signal de balayage et pour transférer les signaux de données ;
un transistor (M3) d'attaque qui est conçu pour être piloté en fonction de la sortie du dispositif (M4) de commutation et pour engendrer un courant ;
un dispositif électroluminescent organique (OLED2) qui est conçu pour être rendu émetteur de lumière par le courant ; et
un interrupteur (M5) de commande d'émission de lumière connecté entre le transistor (M3) d'attaque et le dispositif électroluminescent organique (OLED2) et qui est conçu pour être fermé par l'un quelconque des premier et second signaux (EM1, EM2) de commande d'émission de lumière pour fournir le courant au dispositif électroluminescent organique (OLED2).

7. Procédé d'attaque d'un dispositif d'imagerie électronique incluant :
une unité (100, 100_1) d'affichage incluant une pluralité de lignes (S1, S2, Si, Sn-1, Sn) de balayage, une pluralité de lignes (D1, D2, Dj, Dm-1, Dm) de données et une pluralité de pixels (110, 110_1) incluant une pluralité de transistors (M1, M3) d'attaque délivrant une pluralité de courants à une pluralité de dispositifs électroluminescents organiques (OLED1, OLED2) ; et
une unité (500) formant barrière incluant une première sous-barrière (502) et une seconde sous-barrière (504) ;
le procédé comprenant :
la division de l'unité (100, 100_1) d'affichage en une première région (102) et une seconde région (104), la première région (102) et la seconde région (104) étant séparées par une ligne (Si) de balayage liée au pixel placé au centre de l'unité (100, 100_1) d'affichage ;
la synthèse, durant une première période (T1), de premières images stéréoscopiques dans lesquelles les pixels impairs (OP) affichent une image pour l'oeil gauche et les pixels pairs (EP) affichent une image pour l'oeil droit et la synthèse, durant une seconde période (T2), de secondes images stéréoscopiques dans lesquelles les pixels impairs (OP) affichent une image pour l'oeil droit et les pixels pairs (EP) affichent une image pour l'oeil gauche ;
l'affichage de premières images stéréoscopiques dans la première région (102) où est située une pluralité de premiers pixels de la pluralité de pixels de l'unité (100, 100_1) d'affichage et dans la seconde région (104) où est située une pluralité de seconds pixels de la pluralité de pixels de l'unité (100, 100_1) d'affichage, dans lequel l'affichage des premières images stéréoscopiques comprend la fourniture séquentielle de tensions de données aux lignes respectives (D1, D2, Dm) de données durant une première période (W1) d'écriture de la première période (T1) et l'affichage des secondes images stéréoscopiques comprend la fourniture séquentielle de tensions de données aux lignes respectives (D1, D2, Dm) de données durant une seconde période (W2) d'écriture de la seconde période (T2) ; et
**caractérisé par** l'extinction de la pluralité de premiers pixels dans la première région (102) lorsque les secondes images stéréoscopiques commencent à être affichées dans la première région (102), l'extinction de la pluralité de premiers pixels dans la première région (102) comprenant la fourniture, à la première région (102), d'un premier signal (ELV1, EM1) de commande ayant un niveau d'extinction.

8. Procédé d'attaque d'un dispositif d'imagerie électronique selon la revendication 7, comprenant en outré :
l'extinction de la pluralité de seconds pixels dans la seconde région (104) lorsque les secondes images stéréoscopiques sont affichées dans la seconde région (104) ; et
l'allumage de la pluralité de premiers pixels dans la première région (102) lorsque les secondes images stéréoscopiques sont affichées dans la première région (102),
dans lequel l'extinction de la pluralité de seconds pixels comprend la fourniture, à la seconde région (104), d'un second signal (ELV2, EM2) de commande ayant un niveau d'extinction, et
dans lequel l'allumage de la pluralité de premiers pixels comprend la fourniture, à la première région (102), du premier signal (ELV1, EM1) de commande ayant un niveau d'allumage.

9. Procédé d'attaque d'un dispositif d'imagerie électronique selon la revendication 8, comprenant en outré :
le fait de rendre la première sous-barrière (502) non transmissive et la seconde sous-barrière (504) transmissive, pendant une période où les premières images stéréoscopiques sont affichées sur toute l'unité (100, 100_1) d'affichage et où les secondes images stéréoscopiques sont affichées dans la première région (102) ; et
le fait de rendre la seconde sous-barrière (504) non transmissive et la première sous-barrière (502) transmissive, à partir d'un instant où les secondes images stéréoscopiques sont affichées dans la seconde région,
dans lequel le fait de rendre la première sous-barrière (502) non transmissive comprend la fourniture, à la première sous-barrière (502), d'un premier signal (CB1) d'attaque de barrière ayant un niveau égal ou supérieur à une tension prédéterminée de seuil, et
dans lequel le fait de rendre la seconde sous-barrière (504) non transmissive comprend la fourniture, à la seconde sous-barrière (504), d'un second signal (CB2) d'attaque de barrière ayant un niveau égal ou supérieur à une tension prédéterminée de seuil.

10. Procédé d'attaque d'un dispositif d'imagerie électronique selon l'une des revendications 7 à 9, dans lequel la première sous-barrière (502) comprend des colonnes de pixels impairs (BOP) et la seconde sous-barrière (504) comprend des colonnes de pixels pairs (BEP).

11. Procédé d'attaque d'un dispositif d'imagerie électronique selon l'une des revendications 7 à 10, dans lequel l'extinction de la pluralité de premiers pixels inclut l'utilisation, en tant que tension d'extinction, d'une tension (ELV1) d'attaque appliquée au transistor (M1) d'attaque.

12. Procédé d'attaque d'un dispositif d'imagerie électronique selon l'une des revendications 7 à 10, dans lequel l'extinction de la pluralité de premiers pixels inclut l'ouverture d'interrupteurs (M5) de commande d'émission de lumière associés aux premiers pixels correspondants.

13. Procédé d'attaque d'un dispositif d'imagerie électronique selon l'une des revendications 7 à 12, dans lequel l'affichage inclut l'émission de lumière à partir d'un dispositif électroluminescent organique (OLED1, OLED2) et la fourniture de courant à partir d'un transistor d'attaque au dispositif électroluminescent organique.

14. Procédé d'attaque d'un dispositif d'imagerie électronique selon la revendication 13, dans lequel la fourniture du courant inclut la fermeture d'un interrupteur (M5) de commande d'émission de lumière raccordé entre le transistor (M3) d'attaque et le dispositif électroluminescent organique (OLED2).
